# EUROPEAN PATENT APPLICATION

(11) **EP 4 668 808 A1**
(43) Date of publication of application: **24.12.2025**
(21) Application number: 24756262.2
(22) Date of filing: 07.02.2024
(51) Int. Cl.: H04W 8/24, H04W 72/04

(54) **INFORMATION REPORTING METHOD AND APPARATUS, AND TERMINAL**

(30) Priority: 17.02.2023 CN 202310142334
(71) Applicant: Vivo Mobile Communication Co., Ltd., Dongguan, Guangdong 523863 (CN)
(72) Inventor: LI, Can, Dongguan, Guangdong 523863 (CN); LIU, Siqi, Dongguan, Guangdong 523863 (CN)
(74) Representative: dompatent
(86) International application number: PCT/CN2024/076749
(87) International publication number: WO 2024/169889

(57) **Abstract**

The present application discloses an information reporting method and apparatus, and a terminal, and belongs to the technical field of communications. The information reporting method of the embodiment of the present application comprises: a terminal reporting first information to a network-side device; and the terminal comprising a first Tx and a second Tx. Wherein the first information comprises at least one of the following: a first capability, used for instructing the terminal to support a second uplink transmission channel (Tx) in performing uplink transmission within a first switching period; and a second capability, used for instructing the terminal to support a first Tx in performing uplink transmission within a first time period. The first capability being reported on the basis of at least one of the following: target band pair information; at least one piece of band information in a target band pair; identifier information of a first band; target band list information; and BC information. And the second capability being reported on the basis of at least one of the following: first band pair information; and second band pair information.

## Description

### CROSS-REFERENCE TO RELATED APPLICATIONS

This application claims priority to Chinese Patent Application No. 202310142334.1, filed in China on February 17, 2023, which is incorporated herein by reference in its entirety.

### TECHNICAL FIELD

This application pertains to the field of communication technologies and specifically relates to an information reporting method and apparatus, and a terminal.

### BACKGROUND

Uplink transmission channel switching (UL Tx switching) is a mechanism allowing one terminal, such as user equipment (User Equipment, UE), to perform uplink transmission on up to two transmission channels (Transmission, Tx) simultaneously.

In the related art, two optional UE capabilities have been added for UL Tx switching. However, there is no conclusion on how these additional UE capabilities are reported or how UL Tx switching behaviors corresponding to UE are understood. This leads to inconsistencies in the understanding of UL Tx switching behaviors between a terminal and a network-side device, resulting in errors in terminal uplink transmission.

Therefore, it is an urgent problem to be solved how the terminal and the network-side device can have a consistent understanding of UL Tx switching behaviors corresponding to UE, thereby improving the efficiency of terminal uplink transmission.

### SUMMARY

Embodiments of this application provide an information reporting method and apparatus, and a terminal, which can improve the efficiency of terminal uplink transmission.

According to a first aspect, an information reporting method is provided, executed by a terminal and including:
reporting, by a terminal, first information to a network-side device, where the terminal includes a first uplink transmission channel Tx and a second Tx, and the first information includes at least one of the following:
a first capability used to indicate that the terminal supports the second Tx performing uplink transmission within a first switching period, where the first switching period is a switching period corresponding to a target band pair (band pair) where the first Tx is located when performing uplink Tx switching; and
a second capability used to indicate that the terminal supports the first Tx performing uplink transmission within a first time period, where the first time period is a difference between a third switching period and a second switching period, the third switching period is a switching period corresponding to a second band pair where the second Tx is located when performing uplink switching, and the second switching period is a switching period corresponding to a first band pair where the first Tx is located when performing uplink switching;
reporting the first capability based on at least one of the following:
   information of the target band pair;
   information of at least one band (band) in the target band pair, the at least one band including a first band;
   identification information of the first band;
   information of a target band list (list); and
   information of a band combination BC; where
   the first band is a band of the first Tx before uplink Tx switching, or the first band is a band of the first Tx after uplink Tx switching; and
   reporting the second capability based on at least one of the following:
      information of the first band pair; and
      information of the second band pair.

According to a second aspect, an information reporting apparatus is provided. The apparatus includes:
a reporting module configured to: report first information to a network-side device, where a terminal includes a first uplink transmission channel Tx and a second Tx, and the first information includes at least one of the following:
a first capability used to indicate that the terminal supports the second Tx performing uplink transmission within a first switching period, where the first switching period is a switching period corresponding to a target band pair (band pair) where the first Tx is located when performing uplink Tx switching; and
a second capability used to indicate that the terminal supports the first Tx performing uplink transmission within a first time period, where the first time period is a difference between a third switching period and a second switching period, the third switching period is a switching period corresponding to a second band pair where the second Tx is located when performing uplink switching, and the second switching period is a switching period corresponding to a first band pair where the first Tx is located when performing uplink switching;
report the first capability based on at least one of the following:
   information of the target band pair;
   information of at least one band (band) in the target band pair, the at least one band including a first band;
   identification information of the first band;
   information of a target band list (list); and
   information of a band combination BC; where
   the first band is a band of the first Tx before uplink Tx switching, or the first band is a band of the first Tx after uplink Tx switching; and
   report the second capability based on at least one of the following:
      information of the first band pair; and
      information of the second band pair.

According to a third aspect, a terminal is provided. The terminal includes a processor and a memory, where the memory stores a program or instructions executable on the processor, and when the program or instructions are executed by the processor, the steps of the method according to the first aspect are implemented.

According to a fourth aspect, a terminal is provided, including a processor and a communication interface, where the communication interface is configured to: report first information to a network-side device, where a terminal includes a first uplink transmission channel Tx and a second Tx, and the first information includes at least one of the following: a first capability used to indicate that the terminal supports the second Tx performing uplink transmission within a first switching period, where the first switching period is a switching period corresponding to a target band pair (band pair) where the first Tx is located when performing uplink Tx switching; and a second capability used to indicate that the terminal supports the first Tx performing uplink transmission within a first time period, where the first time period is a difference between a third switching period and a second switching period, the third switching period is a switching period corresponding to a second band pair where the second Tx is located when performing uplink switching, and the second switching period is a switching period corresponding to a first band pair where the first Tx is located when performing uplink switching; report the first capability based on at least one of the following: information of the target band pair; information of at least one band (band) in the target band pair, the at least one band including a first band; identification information of the first band; information of a target band list (list); and information of a band combination BC; where the first band is a band of the first Tx before uplink Tx switching, or the first band is a band of the first Tx after uplink Tx switching; and report the second capability based on at least one of the following: information of the first band pair; and information of the second band pair.

According to a fifth aspect, a readable storage medium is provided, where the readable storage medium stores a program or instructions, and when the program or instructions are executed by a processor, the steps of the method according to the first aspect are implemented.

According to a sixth aspect, a chip is provided. The chip includes a processor and a communication interface, where the communication interface is coupled to the processor, and the processor is configured to run a program or instructions to implement the method according to the first aspect.

According to a seventh aspect, a computer program or program product is provided. The computer program or program product is stored in a storage medium. The computer program or program product is executed by at least one processor to implement the steps of the information reporting method according to the first aspect.

In the embodiments of this application, the terminal reports terminal capabilities to the network-side device based on resources of different reporting granularities, that is, the terminal reports the first capability to the network-side device based on at least one of the information of the target band pair, the information of at least one band in the target band pair, the identification information of the first band, the information of the target band list, and the BC information, indicating that the terminal supports the second Tx performing uplink transmission within the first switching period. The second capability is reported to the network-side device based on the information of the first band pair and the information of the second band pair, indicating that the terminal supports the first Tx performing uplink transmission within the first time period. Through the above method, different reporting granularities of the terminal correspond to different UL Tx switching behaviors, allowing the terminal and the network-side device to have a consistent understanding of UL Tx switching behaviors of the terminal, thereby improving the efficiency of terminal uplink transmission.

### BRIEF DESCRIPTION OF DRAWINGS

FIG. 1 is a schematic diagram of a wireless communication system to which embodiments of this application are applicable;
FIG. 2 is a first schematic flowchart of an information reporting method according to an embodiment of this application;
FIG. 3 is a first schematic diagram of Tx switching according to an embodiment of this application;
FIG. 4 is a second schematic diagram of Tx switching according to an embodiment of this application;
FIG. 5 is a schematic structural diagram of an information reporting apparatus according to an embodiment of this application; and
FIG. 6 is a schematic structural diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects instead of describing a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in this application represents at least one of connected objects. For example, "A or B" covers three solutions: solution 1: including A but not B; solution 2: including B but not A; and solution 3: including both A and B. The character "/" generally indicates an "or" relationship between the contextually associated objects.

The term "indicate" in this application can be either a direct indication (or explicit indication) or an indirect indication (or implicit indication). A direct indication can be understood as a sender explicitly informing a receiver of specific information, operations to be performed, or request results in the sent indication. An indirect indication can be understood as a receiver determining corresponding information based on the indication sent by a sender, or making judgments and determining operations to be performed or request results based on judgment results.

It should be noted that technologies described in the embodiments of this application are not limited to long term evolution (Long Term Evolution, LTE) or LTE-advanced (LTE-Advanced, LTE-A) systems, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6th generation (6th Generation, 6G) communication system.

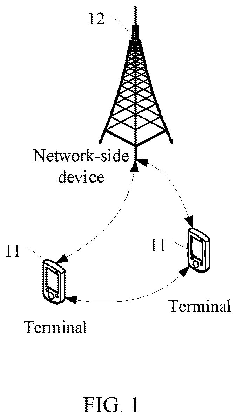

FIG. 1 is a block diagram of a wireless communication system to which embodiments of this application are applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (Augmented Reality, AR), a virtual reality (Virtual Reality, VR) device, a robot, a wearable device (Wearable Device, WD), a flight vehicle (flight vehicle), vehicle user equipment (Vehicle User Equipment, VUE), ship-borne equipment, pedestrian user equipment (Pedestrian User Equipment, PUE), a smart home device (a home device with a wireless communication function, for example, a refrigerator, a television, a washing machine, or furniture), a gaming console, a personal computer (Personal Computer, PC), an automated teller machine or a self-service machine, or other terminal-side devices. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, and the like. The vehicle user equipment may also be referred to as a vehicle terminal, a vehicle controller, a vehicle module, a vehicle component, a vehicle chip, or a vehicle unit. It should be noted that the specific type of the terminal 11 is not limited in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), or a wireless fidelity (Wireless Fidelity, WiFi) node. The base station may be referred to as a Node B (Node B), an evolved Node B (Evolved Node B, eNB), the next generation Node B (the next generation Node B, gNB), a new radio Node B (New Radio Node B, NR Node B), an access point, a relay base station (Relay Base Station, RBS), serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or another appropriate term in the art. Provided that the same technical effects are achieved, the base station is not limited to any specific technical term. It should be noted that in the embodiments of this application, only the base station in the NR system is used as an example for description, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that in the embodiments of this application, only the core network device in the NR system is used as an example for description, and the specific type of the core network device is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that in the embodiments of this application, only the core network device in the NR system is used as an example for description, and the specific type of the core network device is not limited.

To facilitate a clearer understanding of the technical solutions provided by the embodiments of this application, some relevant background knowledge is introduced first as follows.

UL Tx switching is a mechanism allowing one UE to perform transmissions on up to two Tx-s simultaneously, where one carrier (carrier 1) supports one UL Tx, and another carrier (carrier 2) supports two UL Tx-s. Carrier 1 and carrier 2 are on different bands. Switching between two modes is supported by switching Tx-s. In mode 1, dual-stream uplink transmission is performed on carrier 2; in mode 2, single-stream transmission is performed on carrier 1 and/or carrier 2.

Based on whether uplink transmission is performed on both carrier 1 and carrier 2, there are two options: option 1 (with the higher-layer parameter uplink TxSwitchingOption-r16 set to switchedUL by a network, indicating that uplink transmission cannot be performed on both carrier 1 and carrier 2) and option 2 (dualUL, with the higher-layer parameter uplink TxSwitchingOption-r16 set to dualUL by the network, indicating that uplink transmission can be performed on both carrier 1 and carrier 2).

UE reports capabilities, reporting support for option 1, option 2, or both option 1 and option 2 per band combination (Per Band Combination, Per BC), and reporting per band pair (Per band pair) time required for UL Tx switching as a switching period (switching period).

The network configures the higher-layer parameter to specify support for option 1 or option 2 per cell group, and configures per serving cell whether a UL Tx switching period position is on a current cell and whether the cell is carrier 1 or carrier 2.

In the related art, switching scenarios for inter-band carrier aggregation (inter-CA) and supplementary uplink (Supplementary Uplink, SUL) have been further extended. In a case that both carriers support two Tx-s, 2Tx-2Tx switching is supported. Switching is also supported between one carrier on band A and two carriers on band B (where these two carriers can be transmitted through one Tx). In addition, two new RRC parameters have been introduced. One parameter is used to indicate whether a 1Tx-2Tx switching mode or a 2Tx-2Tx switching mode is used. In a case of no unique Tx state after UL Tx switching, the other parameter is used to indicate a state that each carrier has one Tx or one carrier has two Tx-s.

When Tx1 switches from band A to band B, and Tx2 remains on band C, in addition to following the basic terminal assumption (that is, any Tx is unable to perform transmission on band C within a switching period), an additional terminal capability is agreed upon, that is, supporting Tx2 performing uplink transmission on band C within the switching period (additional terminal capability 1). In addition, the granularity of this additional terminal capability can be based on at least the following two options: per band pair per BC and per band per band pair per BC, without excluding other options.

On the other hand, when two transmission channel chains (Tx chains) switch on two different band pairs and correspond to different switching periods, for example, the switching time for Tx1 is Tswitch_1, and the switching time for Tx2 is Tswitch_2, where Tswitch_1 < Tswitch_2, the following two options may be discussed.

Option 1: Based on the basic UE assumption, a further optional UE capability (additional terminal capability 2) is introduced, allowing Tx1 to be used for transmission within the time (Tswitch_2 - Tswitch_1). The basic UE assumption is that neither Tx1 nor Tx2 can be used for transmission within the time Tswitch_1. The further optional UE capability may include but is not limited to the following option: per band pair per BC.

Option 2: No further optional UE capability is introduced.

In summary, in the related art, there is no further discussion or conclusion on understanding of the details of each option for the optional additional terminal capabilities, leading to inconsistencies in the understanding of UL Tx switching behaviors between a terminal and a network-side device, thus resulting in errors in terminal uplink transmission.

Thus, to allow the terminal and the network-side device to have a consistent understanding of UL Tx switching behaviors corresponding to UE, thereby improving the efficiency of terminal uplink transmission, embodiments of this application provide an information reporting method and apparatus, and a terminal.

The following describes in detail the information reporting method provided in the embodiments of this application through some embodiments and application scenarios thereof with reference to the accompanying drawings.

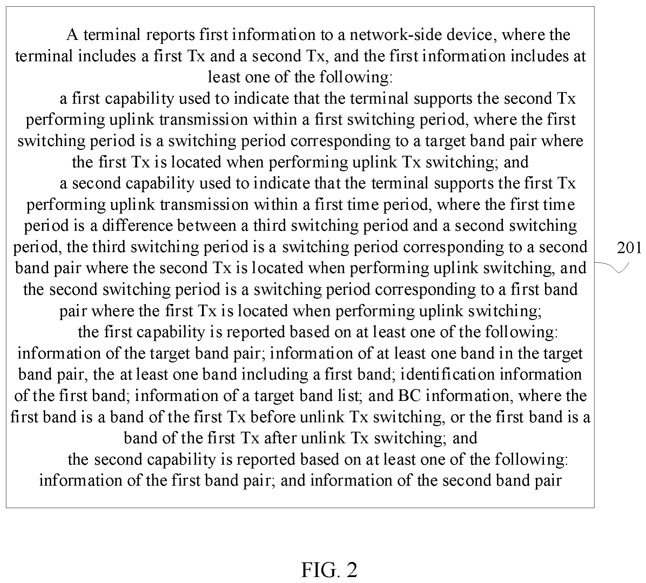

FIG. 2 is a first schematic flowchart of an information reporting method according to an embodiment of this application. As shown in FIG. 2, the method includes step 201.

Step 201: A terminal reports first information to a network-side device, where the terminal includes a first Tx and a second Tx, and the first information includes at least one of the following:
a first capability used to indicate that the terminal supports the second Tx performing uplink transmission within a first switching period, where the first switching period is a switching period corresponding to a target band pair where the first Tx is located when performing uplink Tx switching; and
a second capability used to indicate that the terminal supports the first Tx performing uplink transmission within a first time period, where the first time period is a difference between a third switching period and a second switching period, the third switching period is a switching period corresponding to a second band pair where the second Tx is located when performing uplink switching, and the second switching period is a switching period corresponding to a first band pair where the first Tx is located when performing uplink switching;
the first capability is reported based on at least one of the following: information of the target band pair; information of at least one band in the target band pair, the at least one band including a first band; identification information of the first band; information of a target band list; and BC information, where the first band is a band of the first Tx before uplink Tx switching, or the first band is a band of the first Tx after uplink Tx switching; and
the second capability is reported based on at least one of the following: information of the first band pair; and information of the second band pair.

It should be noted that the embodiments of this application can be applied to scenarios of terminal uplink transmission. The terminal includes but is not limited to the types of the terminal 11 listed above, which is not limited in this application. The network-side device includes but is not limited to the types of the network-side device 12 listed above, which is not limited in this application.

In this embodiment of this application, the terminal reports the first information to the network-side device, so that the network-side device can have a consistent understanding of UL Tx switching behaviors with the terminal based on the first information, thereby improving the efficiency of terminal uplink transmission.

The first information includes at least one of the first capability and the second capability of the terminal. The terminal needs to report the first capability and the second capability based on resources of different reporting granularities, where the resources of different reporting granularities correspond to different UL Tx switching behaviors of the terminal.

Correspondingly, different capability reporting granularities of the terminal result in different signaling of the first information.

For example, in a case that the terminal reports the first capability based on the information of the target band pair, the signaling of the first information may be expressed as:

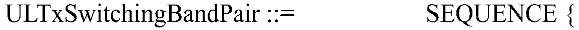

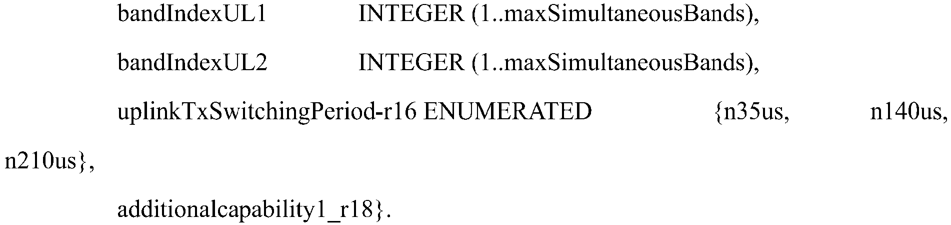

In a case that the terminal reports the first capability based on the information of at least one band in the target band pair, the at least one band including a first band, where the first band is the band of the first Tx before uplink Tx switching, or the first band is the band of the first Tx after uplink Tx switching; and the first band may be specified by a protocol.

The signaling of the first information may be expressed as:

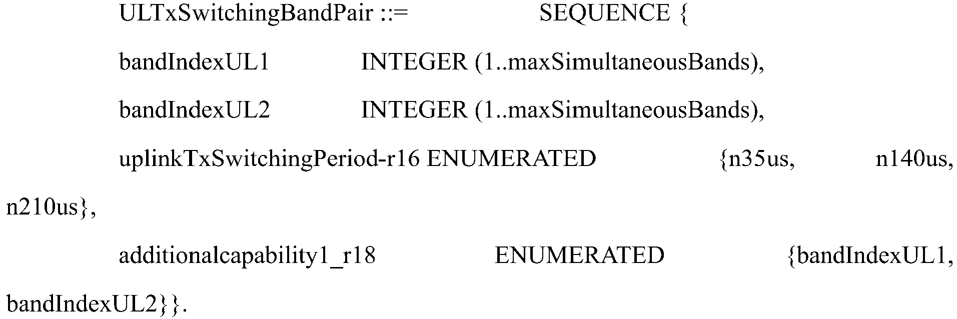

In a case that the terminal reports the first capability based on the identification information of the first band, the signaling of the first information may be expressed as:

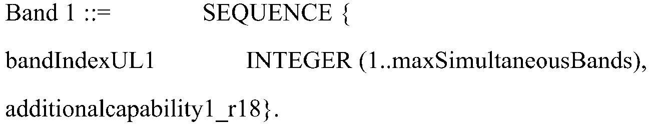

In a case that the terminal reports the second capability based on the information of the first band pair and the information of the second band pair, the signaling of the first information may be expressed as:

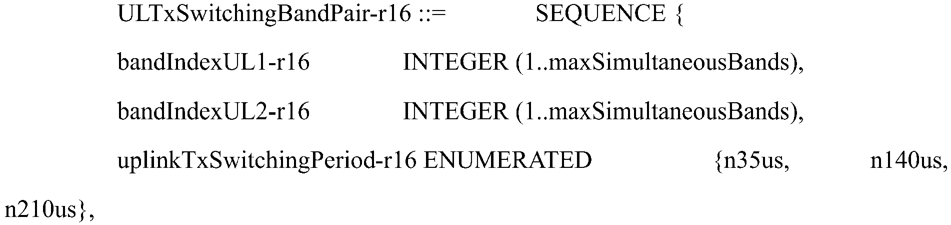

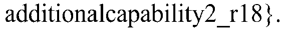

It should be noted that the signaling for the first capability or the second capability (that is, the signaling for additional capabilities) may be the same as or different from the signaling for the basic capability. The signaling for the first capability and the second capability may be the same or different.

In the embodiments of this application, the terminal reports terminal capabilities to the network-side device based on resources of different reporting granularities, that is, the terminal reports the first capability to the network-side device based on at least one of the information of the target band pair, the information of at least one band in the target band pair, the identification information of the first band, the information of the target band list, and the BC information, indicating that the terminal supports the second Tx performing uplink transmission within the first switching period. The second capability is reported to the network-side device based on the information of the first band pair and the information of the second band pair, indicating that the terminal supports the first Tx performing uplink transmission within the first time period. Through the above method, different reporting granularities of the terminal correspond to different UL Tx switching behaviors, allowing the terminal and the network-side device to have a consistent understanding of UL Tx switching behaviors of the terminal, thereby improving the efficiency of terminal uplink transmission.

Optionally, different reporting granularities of the terminal correspond to different UL Tx switching behaviors. A manner in which the terminal reports the first capability to the network-side device based on the resources of different reporting granularities includes at least one of the following:
In a case that the terminal reports the first capability per band pair per BC (per band pair per BC), that is, the terminal reports the first capability based on information of a target band pair in a target BC, a manner in which the terminal reports the first capability includes the following manner 1 and manner 2, where per BC may serve as an optional feature.

Manner 1: In a case that the first capability is reported based on the information of the target band pair, in a case that the first Tx performs uplink Tx switching within the target band pair, the terminal uses the second Tx to perform uplink transmission on a third band outside of the target band pair within the first switching period.

That is, if one target band pair of one BC reports the first capability, or if the first capability corresponds to at least one target band pair, when one Tx (for example, the first Tx, also referred to as Tx1) performs uplink Tx switching within the target band pair (for example, band A and band B) (that is, Tx1 switches from one band to another band in the target band pair), and another Tx (for example, the second Tx, also referred to as Tx2) is on a band (for example, a third band) outside of the target band pair, Tx2 can perform uplink transmission on the third band within a switching period of Tx1 (or a switching period corresponding to the target band pair); that is, Tx2 is not affected by the switching of Tx1.

For example, if the target band pair includes band A and band B, in a case that the first capability is reported on band A and band B, and Tx1 switches from band A to band B or switches from band B to band A, Tx2 on band C can perform uplink transmission within the switching period of Tx1.

The signaling of the first capability reported by the terminal may be expressed as:

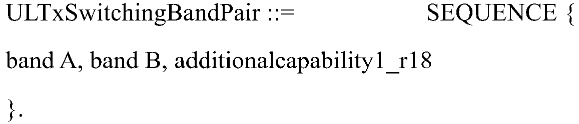

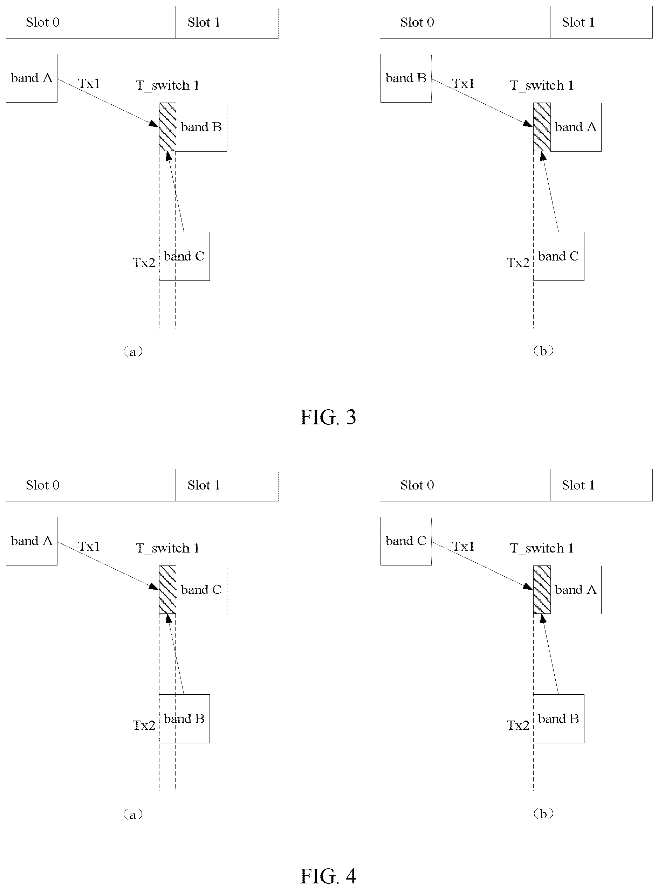

FIG. 3 is a first schematic diagram of Tx switching according to an embodiment of this application. As shown in FIG. 3(a), a band pair includes band A and band B, Tx1 switches from band A to band B, a switching period of Tx1 is T_switch1, and Tx2 on band C can perform uplink transmission within T_switch1.

As shown in FIG. 3(b), a band pair includes band A and band B, Tx1 switches from band B to band A, a switching period of Tx1 is T_switch1, and Tx2 on band C can perform uplink transmission within T_switch1.

The terminal can relatively easily report the first capability to the network-side device based on manner 1.

Manner 2: In a case that the first capability is reported based on the information of the target band pair, in a case that the first Tx performs uplink Tx switching on the first band of the target band pair and a third band outside of the target band pair, the terminal uses the second Tx to perform uplink transmission on a second band of the target band pair within the first switching period.

That is, if one target band pair of one BC reports the first capability, or if the first capability corresponds to at least one target band pair, when one Tx (for example, Tx1) performs uplink Tx switching on any band (band A) in the target band pair and a band (that is, a third band, for example, band C) outside of the target band pair (where any band includes band A as a band before switching or a band after switching), Tx2 is on band B within the target band pair, and Tx2 can perform uplink transmission on band B within the switching period of Tx1.

For example, if the target band pair includes band A and band B, in a case that the first capability is reported on band A and band B, and Tx1 switches from band A to band C outside of band B, Tx2 on band B can perform uplink transmission within the switching time for Tx1.

The signaling of the first capability reported by the terminal may be expressed as:

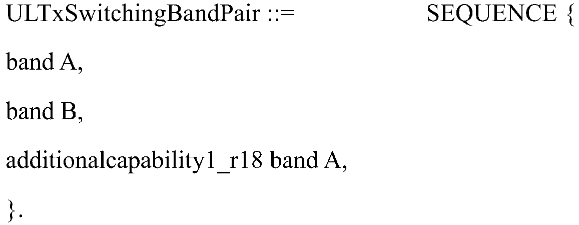

FIG. 4 is a second schematic diagram of Tx switching according to an embodiment of this application. As shown in FIG. 4(a), a band pair includes band A and band B, Tx1 switches from band A to band C, a switching period of Tx1 is T_switch1, and Tx2 on band B can perform uplink transmission within T_switch1.

As shown in FIG. 4(b), a band pair includes band A and band B, Tx1 switches from band C to band A, a switching period of Tx1 is T_switch1, and Tx2 on band B can perform uplink transmission within T_switch1.

Reporting the first capability to the network-side device based on manner 2 can determine the band for uplink transmission based on one specific band involved in Tx switching, but the switching time for Tx varies depending on the band pair involved in the switching, which may increase terminal complexity to some extent.

In a case that the terminal reports the first capability per band per band pair per BC (per band per band pair per BC), that is, the terminal reports the first capability based on information of at least one band in a target band pair in a target BC, a manner in which the terminal reports the first capability includes the following manner 3 and manner 4, where per BC may serve as an optional feature.

Manner 3: In a case that the first capability is reported based on the information of the target band pair and the information of at least one band in the target band pair, in a case that the first Tx performs uplink Tx switching within the target band pair, the terminal uses the second Tx to perform uplink transmission on a third band outside of the target band pair within the first switching period.

That is, if one band in one target band pair in one BC reports the first capability, or if the first capability corresponds to at least one band, when one Tx (for example, Tx1) performs switching on a band in the target band pair (for example, the band is a first band, and the first band may be a band before switching and/or a band after switching), and another Tx (for example, Tx2) is on a band (that is, a third band, for example, band C) outside of the target band pair, Tx2 can perform uplink transmission on band C within the switching period of Tx1.

For example, if the target band pair includes band A and band B, in a case that the first capability is reported on band A in the target band pair, and Tx1 switches between band A and band B (including the cases where Tx1 switches from band A to band B or Tx1 switches from band B to band A), Tx2 on band C can perform uplink transmission within the switching time for Tx1.

It should be noted that the difference between manner 3 and manner 1 is that in manner 3, the at least one band in the target band pair includes the first band; and the first band is the band before uplink Tx switching or the band after uplink Tx switching. Moreover, the first band can be determined by any one of manners of protocol specification, terminal capability reporting indication, and base station configuration.

Manner 4: In a case that the first capability is reported based on the information of the target band pair and the information of the first band of the target band pair, in a case that the first Tx performs uplink Tx switching on the first band of the target band pair and a third band outside of the target band pair, the terminal uses the second Tx to perform uplink transmission on the second band of the target band pair within the first switching period.

That is, if one band in one target band pair in one BC reports the first capability, or if the first capability corresponds to at least one band, when one Tx (Tx1) performs uplink Tx switching on a first band (for example, band A) in the target band pair and a band (for example, a third band) outside of the target band pair, Tx2 is on band B outside of the target band pair, and Tx2 can perform uplink transmission on band B within the switching period of Tx1.

For example, if the target band pair includes band A and band B, in a case that the first capability is reported on band A in the target band pair, and Tx1 switches between band A and band C (for example, including the cases where Tx1 switches from band A to band C or Tx1 switches from band C to band A), Tx2 on band B can perform uplink transmission within the switching time for Tx1.

It should be noted that the difference between manner 4 and manner 2 is that in manner 4, the first band can be determined as one band in the target band pair by any one of manners of protocol specification, terminal capability reporting indication, and base station configuration.

In a case that the terminal reports the first capability per band per BC (per band per BC), that is, the terminal reports the first capability based on identification information of a first band in a target BC, a manner in which the terminal reports the first capability includes the following manner 5, where per BC may serve as an optional feature.

Manner 5: In a case that the first capability is reported based on the identification information of the first band, in a case that the first Tx performs uplink Tx switching on the first band, the terminal uses the second Tx to perform uplink transmission on a third band within the first switching period, where the third band is different from a band where the first Tx is located when performing uplink Tx switching.

That is, if one first band of one BC reports the first capability, when one Tx (for example, Tx1) performs switching on the first band (including cases where Tx1 switches from another band (also referred to as a target band) to the first band, or Tx1 switches from the first band to another band), and another Tx (for example, Tx2) is on another band (for example, a third band) outside of the above two bands, Tx2 can perform uplink transmission on the third band within a switching period of Tx1.

Optionally, the target band is any band that can perform Tx switching with the first band.

Optionally, the target band is a specific band that can perform Tx switching with the first band, and the specific band can be specified by a protocol, for example, a band where PUCCH is located.

The first capability is reported based on manner 5, with flexible implementation, but the terminal has a high implementation complexity.

In a case that the terminal reports the first capability per band list per BC (per band list per BC), that is, the terminal reports the first capability based on information of a target band list in a target BC, a manner in which the terminal reports the first capability includes the following manner 6, where the target band list includes at least one band. For example, the target band list includes three or four bands; and per BC may serve as an optional feature.

Manner 6: In a case that the first capability is reported based on the information of the target band list, in a case that the first Tx performs uplink Tx switching on any band of the target band list, the terminal uses the second Tx to perform uplink transmission on a third band within the first switching period, where the third band is different from the band where the first Tx is located when performing uplink Tx switching.

That is, if one band list of one BC reports the first capability, when one Tx (for example, Tx1) performs switching within the target band list (including cases where Tx1 switches from another band to a band in the target band list, or Tx1 switches from the band in the target band list to another band), and another Tx (for example, Tx2) is on another band (for example, a third band) outside of the above two bands, Tx2 can perform uplink transmission on the third band within the switching period of Tx1.

In a case that the terminal reports the first capability per BC (per BC), that is, the terminal reports the first capability based on BC information, a manner in which the terminal reports the first capability includes the following manner 7.

Manner 7: In a case that the first capability is reported based on the BC information, in a case that the first Tx performs uplink Tx switching on any band of the BC, the terminal uses the second Tx to perform uplink transmission on a third band within the first switching period, where the third band is different from the band where the first Tx is located when performing uplink Tx switching.

That is, when Tx1 switches from any band of the BC to another band or switches from another band to any band of the BC, the terminal uses Tx2 to perform uplink transmission on the third band within the switching period of Tx1. That is, uplink transmission on the third band is not affected by the switching of another Tx.

In a case that the terminal reports the first capability per terminal (per UE), a manner in which the terminal reports the first capability includes the following manner 8.

Manner 8: In a case that the first Tx performs uplink Tx switching on any band corresponding to the terminal, the terminal uses the second Tx to perform uplink transmission on a third band within the first switching period, where the third band is different from the band where the first Tx is located when performing uplink Tx switching.

A per-BC or per-UE terminal capability reporting granularity is larger but may lead to a high implementation complexity for the terminal.

Optionally, the third band includes any one of the following:
(a) a band outside of the target band pair;
(b) a specific band;
(c) a protocol-specified band; and
(d) a band reported by the terminal and bound to the target band pair.

In the foregoing embodiments, the terminal reports the first capability based on different reporting granularities, allowing the terminal and the network-side device to have a consistent understanding of UL Tx switching behaviors of the terminal, and avoiding errors in uplink transmission, thereby improving the efficiency of terminal uplink transmission.

Optionally, when two Tx chains respectively perform switching within two different band pairs and correspond to different switching periods, for example, the switching time for Tx1 is Tswitch_1, and the switching time for Tx2 is Tswitch_2, where Tswitch_1 < Tswitch_2, the second capability of the terminal can be expressed through any one of the following manners.
(a) The second capability means that the terminal allows Tx1 to be used for transmission within the time (Tswitch_2 - Tswitch_1).
(b) The second capability means that neither Tx1 nor Tx2 can be used for transmission within the time (Tswitch_1).
(c) Each Tx follows the switching period of the band pair corresponding to its switching, or each Tx cannot transmit within a switching period of a band pair corresponding to its switching, that is, Tx1 cannot transmit within the time Tswitch_1, and Tx2 cannot transmit within the time Tswitch_1.

Different reporting granularities of the terminal correspond to different UL Tx switching behaviors. A manner in which the terminal reports the second capability to the network-side device based on the resources of different reporting granularities includes at least one of the following:
Manner [1]: In a case that the second capability is reported based on the information of the first band pair and the information of the second band pair, the terminal uses the first Tx to perform uplink transmission within the first time period.

That is, if two band pairs (the first band pair and the second band pair) each have the second capability, the terminal allows Tx1 to be used for uplink transmission within the time (Tswitch_2 - Tswitch_1).

Manner [2]: In a case that the second capability is reported based on the information of the first band pair, the terminal uses the first Tx to perform uplink transmission within the first time period.

That is, when the first band pair has the second capability, and the second band pair does not have the second capability; or the second band pair has terminal capability 0, then when a switching period of the first band pair is less than a switching period of the second band pair (Tswitch_1 < Tswitch_2), Tx1 (the Tx within the first band pair) is used for uplink transmission within the time (Tswitch_2 - Tswitch_1).

It should be noted that terminal capability 0 means that two Tx-s in the second band pair switch according to a longer time (greater than Tswitch_2).

Manner [3]: In a case that the second capability is reported not based on the information of the first band pair or the information of the second band pair, the terminal forbids using the first Tx to perform uplink transmission within the first time period.

That is, if at least one band pair in two band pairs does not have the second capability, the terminal forbids using Tx1 to be used for uplink transmission within the time (Tswitch_2 - Tswitch_1).

Optionally, in the foregoing embodiments, a specific channel or signal, such as a physical uplink control channel (Physical Uplink Control Channel, PUCCH) or a sounding reference signal (Sounding Reference Signal, SRS) is transmitted within the time (Tswitch_2 - Tswitch_1).

Optionally, that the terminal uses the first Tx to perform uplink transmission within the first time period can be specifically implemented through the following steps:

In a case that a target condition is met, the terminal uses the first Tx to perform uplink transmission within the first time period, where
the target condition includes at least one of the following:
(a) the third switching period and the second switching period at least partially overlap in time domain; and
(b) the first band pair and the second band pair each include a fourth band, and positions of the third switching period and the second switching period are both configured on the fourth band.

In the foregoing embodiments, the terminal reports the second capability based on different reporting granularities, allowing the terminal and the network-side device to have a consistent understanding of UL Tx switching behaviors of the terminal, and avoiding errors in uplink transmission, thereby improving the efficiency of terminal uplink transmission.

Optionally, in a case that the first Tx and the second Tx of the terminal perform uplink Tx switching from a third band pair to a fourth band pair, where the third band pair includes a fifth band and a seventh band, and the fourth band pair includes a sixth band and the seventh band, that is, Tx2 and Tx1 of the terminal perform uplink switching from (band A + band C) to (band B + band C), the terminal determines, based on a target manner, at least one of the following: a path for the terminal to perform uplink Tx switching, or a time for the terminal to interrupt or switch uplink transmission.
(a) The terminal performs uplink Tx switching based on a first path, where the first path is used to indicate that the first Tx switches within the third band pair from the fifth band to the seventh band, and the second Tx switches from the seventh band to the sixth band in the fourth band pair.
   For example, the third band pair includes (band A + band C), and the fourth band pair includes (band B + band C); and the first path is used to indicate that Tx1 switches from band A to band C, and Tx2 switches from band C to band B.
(b) The terminal performs uplink Tx switching based on a second path, where the second path is used to indicate that the first Tx switches from the fifth band in the third band pair to the sixth band in the fourth band pair, and the second Tx remains on the seventh band.
   For example, the third band pair includes (band A + band C), and the fourth band pair includes (band B + band C); and the second path is used to indicate that Tx1 switches from band A to band B, and Tx2 remains on band C.
(c) Uplink transmissions on the fifth band, the sixth band, and the seventh band are all interrupted within a duration of a target switching period, or the terminal performs no uplink transmission within the duration of the target switching period.

For example, the third band pair includes a fifth band (band A) and a seventh band (band C), and the fourth band pair includes a sixth band (band B) and the seventh band (band C); and uplink transmissions on band A, band B, and band C are all interrupted within the duration of the target switching period, or the terminal does not expect to perform uplink transmission within the duration of the target switching period.

The target switching period is a greater value of a fourth switching period and a fifth switching period, where the fourth switching period is a switching period corresponding to the third band pair, and the fifth switching period is a switching period corresponding to the fourth band pair. Specifically, the target switching period may be expressed as max(T1, T2).
(d) Uplink transmissions on the fifth band, the sixth band, and the seventh band are all interrupted within a duration of the fourth switching period, or the terminal performs no uplink transmission within the duration of the fourth switching period, or the terminal performs uplink transmission within a second time period.

For example, the third band pair includes a fifth band (band A) and a seventh band (band C), and the fourth band pair includes a sixth band (band B) and the seventh band (band C); uplink transmissions on band A, band B, and band C are all interrupted within a time period (T1) of the fourth switching period, or the terminal does not expect to perform transmission within the time T1; and Tx2 can be used for uplink transmission within the second time period.

The second time period is a time period corresponding to a difference between the fifth switching period and the fourth switching period. Specifically, the second time period may be expressed as a duration (T2 - T1) (if T2 > T1) for uplink transmission.
(e) Uplink transmissions on the fifth band, the sixth band, and the seventh band are all interrupted within a duration of a sixth switching period, or the terminal performs no uplink transmission within the duration of the sixth switching period.

For example, the third band pair includes a fifth band (band A) and a seventh band (band C), and the fourth band pair includes a sixth band (band B) and the seventh band (band C); and uplink transmissions on band A, band B, and band C are all interrupted within the duration of the sixth switching period, or the terminal does not expect to perform uplink transmission within the duration of the sixth switching period.

The sixth switching period is a switching time period for the first Tx to switch from the fifth band in the third band pair to the sixth band in the fourth band pair, which may be expressed as T3.
(f) Uplink transmissions on the fifth band and the sixth band are both interrupted within the duration of the sixth switching period, or the terminal performs no uplink transmission within the duration of the sixth switching period, or the terminal performs uplink transmission within the sixth switching period.

For example, the third band pair includes a fifth band (band A) and a seventh band (band C), and the fourth band pair includes a sixth band (band B) and the seventh band (band C); uplink transmissions on band A and band B are both interrupted within the duration of the sixth switching period (T3), or the terminal does not expect to perform uplink transmission within the duration of T3; and Tx2 can be used for uplink transmission within the duration of T3.

In the foregoing embodiments, the terminal can determine, based on the target manner, the path for uplink Tx switching or the time for the terminal to interrupt or switch uplink transmission, and report the path and the time to the network-side device, allowing the terminal and the network-side device to have a consistent understanding of UL Tx switching behaviors of the terminal, and avoiding errors in uplink transmission, thereby improving the efficiency of terminal uplink transmission.

Optionally, the target manner includes at least one of the following:
(a) a terminal implementation manner;
(b) a terminal reporting manner;
(c) a UE capability reporting manner; and
(d) a predefined rule.

Optionally, in a case that the target manner includes the UE capability reporting manner, and the terminal reports the first capability to the network-side device, the terminal determines to perform uplink Tx switching based on the second path.

For example, in a case that the terminal reports the first capability to the network-side device, the terminal determines, based on the UE capability reporting manner, to perform uplink Tx switching based on the second path. That is, the third band pair includes (band A + band C), and the fourth band pair includes (band B + band C); and the second path is used to indicate that Tx1 switches from band A to band B, and Tx2 remains on band C.

Correspondingly, band A and band B both interrupt transmission according to max(T1, T2, T3), and band C is only used for terminal transmission of Tx2.

Alternatively, in a case that the target manner includes the UE capability reporting manner, and the terminal reports the second capability to the network-side device, the terminal determines to perform uplink Tx switching based on the first path.

For example, in a case that the terminal reports the second capability to the network-side device, the terminal determines, based on the UE capability reporting manner, to perform uplink Tx switching based on the first path. That is, the third band pair includes (band A + band C), and the fourth band pair includes (band B + band C); and the first path is used to indicate that Tx1 switches from band A to band C, and Tx2 switches from band C to band B.

Correspondingly, band A and band B both interrupt transmission according to max(T1, T2, T3), and band C is only used for terminal transmission of Tx1.

It should be noted that in a case that the target manner includes the UE capability reporting manner, and the terminal does not report the first capability or the second capability to the network-side device, the terminal can determine the time for interrupting or switching uplink transmission through the following manners:
(a) In a case that the third band pair includes a fifth band (band A) and a seventh band (band C), and the fourth band pair includes a sixth band (band B) and the seventh band (band C), uplink transmissions on band A, band B, and band C are all interrupted within the duration max(T1, T2).
(b) Uplink transmissions on band A, band B, and band C are all interrupted within the duration of T3, or the terminal performs no uplink transmission within the duration of the sixth switching period.

In the above cases, the terminal does not need to distinguish the path for performing uplink Tx switching, and application of (a) or (b) can be based on implementation, or determined in combination with network parameter configuration or the predefined rule.

Optionally, the predefined rule includes at least one of the following:
(a) A correspondence between the second path and a first scenario, where an interruption time or a switching time for the terminal to perform uplink Tx switching based on the second path is related to the first capability, and the first scenario includes at least one of the following: the first Tx and the second Tx of the terminal perform uplink Tx switching from the third band pair to the fourth band pair; the network-side device schedules transmission on the sixth band; an RRC parameter configuration includes two Tx-s on different bands; and an associated band of the sixth band is the seventh band.

In a case that the predefined rule includes the correspondence between the second path and the first scenario, the first scenario, for example, is as follows: the third band pair includes band A and band C, and the fourth band pair includes band B and band C; Tx2 and Tx1 of the terminal perform uplink Tx switching from the third band pair to the fourth band pair; the network-side device schedules 1port transmission on band B; the RRC parameter configures oneT, and an associated band of band B is band C.

In the above case, the interruption time or the switching time for the terminal to perform switching based on the second path is related to the first capability. For example, in a case that the terminal reports the first capability, uplink transmissions on band A and band B are both interrupted within the duration of T3, or the terminal does not expect to perform uplink transmission within the duration of T3; and Tx2 can be used for uplink transmission within the duration of T3.

In a case that the terminal does not report the first capability, uplink transmissions on band A, band B, and band C are all interrupted within the duration of T3, or the terminal does not expect to perform uplink transmission within the duration of T3.
(b) A correspondence between the first path and a second scenario, where an interruption time or a switching time for the terminal to perform uplink Tx switching based on the first path is related to the second capability, and the second scenario includes the network-side device scheduling transmission on the sixth band and transmission on the seventh band.

In a case that the predefined rule includes the correspondence between the first path and the second scenario, the second scenario, for example, is as follows: the third band pair includes band A and band C, and the fourth band pair includes band B and band C; and the network-side device schedules 1port transmission on band B and 1port transmission on band C.

In the above case, the interruption time or the switching time for the terminal to perform switching based on the first path is related to the second capability. For example, in a case that the terminal reports the second capability, uplink transmissions on band A, band B, and band C are all interrupted within the time period (T1) of the fourth switching period, or the terminal does not expect to perform transmission within the duration of T1; and Tx1 can be used for uplink transmission within a time period (T2 - T1).

In a case that the terminal does not report the second capability, uplink transmissions on band A, band B, and band C are all interrupted within the duration max(T1, T2), or the terminal does not expect to perform uplink transmission within the duration max(T1, T2).
(c) A correspondence between the second path and a first comparison result, where the first comparison result is that the target switching period is greater than or equal to the sixth switching period.

In a case that the first comparison result is that max(T1, T2) being greater than or equal to T3, the terminal performs uplink transmission based on the second path.

The time determined by the terminal for interrupting or switching uplink transmission depends on the reporting of the first capability of the terminal. For example, in a case that the terminal reports the first capability, uplink transmissions on band A and band B are both interrupted within the duration of T3, or the terminal does not expect to perform uplink transmission within the duration of T3; and Tx2 can be used for uplink transmission within the duration of T3.

In a case that the terminal does not report the first capability, uplink transmissions on band A, band B, and band C are all interrupted within the duration of T3, or the terminal does not expect to perform uplink transmission within the duration of T3.
(d) A correspondence between the first path and a second comparison result, where the second comparison result is that the target switching period is less than the sixth switching period.

In a case that the second comparison result is that max(T1, T2) being less than T3, the terminal performs uplink transmission based on the first path.

The time determined by the terminal for interrupting or switching uplink transmission depends on the reporting of the second capability of the terminal. For example, in a case that the terminal reports the second capability, uplink transmissions on band A, band B, and band C are all interrupted within T1, or the terminal does not expect to perform transmission within the duration of T1; and Tx2 can be used for uplink transmission within a duration (T2 - T1) (if T2 > T1).

In a case that the terminal does not report the second capability, uplink transmissions on band A, band B, and band C are all interrupted within the duration max(T1, T2).

In the foregoing embodiments, the terminal can determine, based on the predefined rule, the path for uplink Tx switching or the time for the terminal to interrupt or switch uplink transmission, and report the path and the time to the network-side device, allowing the terminal and the network-side device to have a consistent understanding of UL Tx switching behaviors of the terminal, and avoiding errors in uplink transmission, thereby improving the efficiency of terminal uplink transmission.

The information reporting method provided in the embodiments of this application can be executed by an information reporting apparatus. In the embodiments of this application, the information reporting method being executed by the information reporting apparatus is used as an example to describe an information reporting apparatus according to an embodiment of this application.

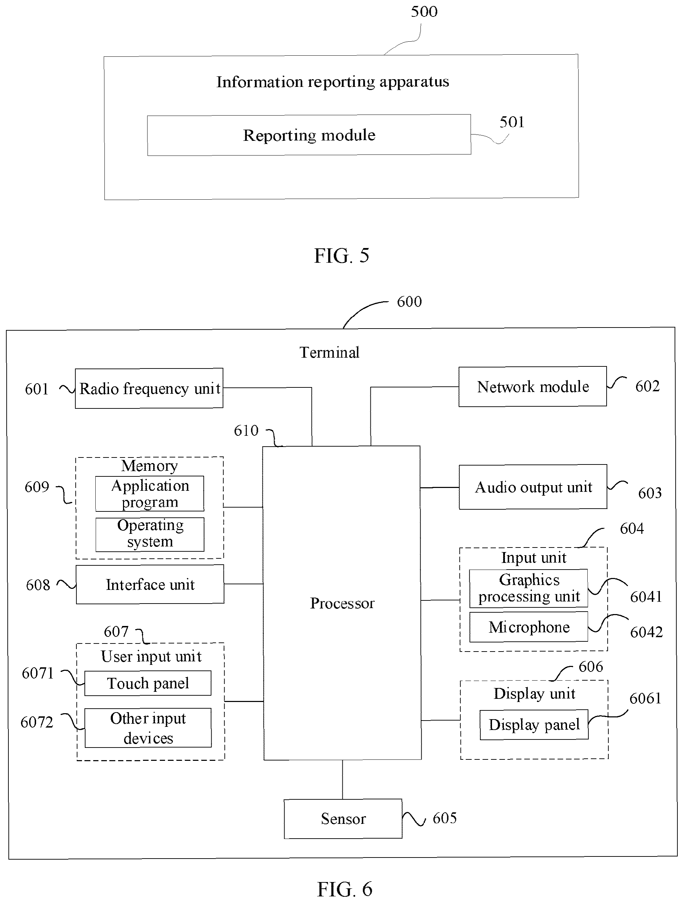

FIG. 5 is a schematic structural diagram of an information reporting apparatus according to an embodiment of this application. As shown in FIG. 5, the information reporting apparatus 500 includes:
a reporting module 501 configured to: report first information to a network-side device, where a terminal includes a first uplink transmission channel Tx and a second Tx, and the first information includes at least one of the following:
a first capability used to indicate that the terminal supports the second Tx performing uplink transmission within a first switching period, where the first switching period is a switching period corresponding to a target band pair (band pair) where the first Tx is located when performing uplink Tx switching; and
a second capability used to indicate that the terminal supports the first Tx performing uplink transmission within a first time period, where the first time period is a difference between a third switching period and a second switching period, the third switching period is a switching period corresponding to a second band pair where the second Tx is located when performing uplink switching, and the second switching period is a switching period corresponding to a first band pair where the first Tx is located when performing uplink switching;
report the first capability based on at least one of the following:
   information of the target band pair;
   information of at least one band (band) in the target band pair, the at least one band including a first band;
   identification information of the first band;
   information of a target band list (list); and
   information of a band combination BC; where
   the first band is a band of the first Tx before uplink Tx switching, or the first band is a band of the first Tx after uplink Tx switching; and
   report the second capability based on at least one of the following:
      information of the first band pair; and
      information of the second band pair.

In the information reporting apparatus according to this embodiment of this application, terminal capabilities are reported to the network-side device based on resources of different reporting granularities, that is, the terminal reports the first capability to the network-side device based on at least one of the information of the target band pair, the information of at least one band in the target band pair, the identification information of the first band, the information of the target band list, and the BC information, indicating that the terminal supports the second Tx performing uplink transmission within the first switching period. The second capability is reported to the network-side device based on the information of the first band pair and the information of the second band pair, indicating that the terminal supports the first Tx performing uplink transmission within the first time period. Through the above method, different reporting granularities of the terminal correspond to different UL Tx switching behaviors, allowing the terminal and the network-side device to have a consistent understanding of UL Tx switching behaviors of the terminal, thereby improving the efficiency of terminal uplink transmission.

Optionally, the apparatus further includes:
a first transmission module configured to: in a case that the first capability is reported based on the information of the target band pair, in a case that the first Tx performs uplink Tx switching within the target band pair, use the second Tx to perform uplink transmission on a third band outside of the target band pair within the first switching period;
a second transmission module configured to: in a case that the first capability is reported based on the information of the target band pair and the information of at least one band in the target band pair, in a case that the first Tx performs uplink Tx switching within the target band pair, use the second Tx to perform uplink transmission on a third band outside of the target band pair within the first switching period;
a third transmission module configured to: in a case that the first capability is reported based on the information of the target band pair, in a case that the first Tx performs uplink Tx switching on the first band of the target band pair and a third band outside of the target band pair, use the second Tx to perform uplink transmission on a second band of the target band pair within the first switching period;
a fourth transmission module configured to: in a case that the first capability is reported based on the information of the target band pair and the information of the first band of the target band pair, in a case that the first Tx performs uplink Tx switching on the first band of the target band pair and a third band outside of the target band pair, use the second Tx to perform uplink transmission on the second band of the target band pair within the first switching period;
a fifth transmission module configured to: in a case that the first capability is reported based on the identification information of the first band, in a case that the first Tx performs uplink Tx switching on the first band, use the second Tx to perform uplink transmission on a third band within the first switching period, where the third band is different from a band where the first Tx is located when performing uplink Tx switching;
a sixth transmission module configured to: in a case that the first capability is reported based on the information of the target band list, in a case that the first Tx performs uplink Tx switching on any band of the target band list, use the second Tx to perform uplink transmission on a third band within the first switching period, where the third band is different from the band where the first Tx is located when performing uplink Tx switching;
a seventh transmission module configured to: in a case that the first capability is reported based on the BC information, in a case that the first Tx performs uplink Tx switching on any band of the BC, use the second Tx to perform uplink transmission on a third band within the first switching period, where the third band is different from the band where the first Tx is located when performing uplink Tx switching; and
an eighth transmission module configured to: in a case that the first Tx performs uplink Tx switching on any band corresponding to the terminal, use the second Tx to perform uplink transmission on a third band within the first switching period, where the third band is different from the band where the first Tx is located when performing uplink Tx switching.

Optionally, the third band includes any one of the following:
a band outside of the target band pair;
a specific band;
a protocol-specified band; and
a band reported by the terminal and bound to the target band pair.

Optionally, the apparatus further includes:
a ninth transmission module configured to: in a case that the second capability is reported based on the information of the first band pair and the information of the second band pair, use the first Tx to perform uplink transmission within the first time period;
a tenth transmission module configured to: in a case that the second capability is reported based on the information of the first band pair, use the first Tx to perform uplink transmission within the first time period; and
an eleventh transmission module configured to: in a case that the second capability is reported not based on the information of the first band pair or the information of the second band pair, forbid using the first Tx to perform uplink transmission within the first time period.

Optionally, the apparatus further includes:
a twelfth transmission module configured to: in a case that a target condition is met, use the first Tx to perform uplink transmission within the first time period, where the target condition includes at least one of the following:
the third switching period and the second switching period at least partially overlap in time domain; and
the first band pair and the second band pair each include a fourth band, and positions of the third switching period and the second switching period are both configured on the fourth band.

Optionally, the apparatus further includes:
a determining module configured to perform at least one of the following:
performing uplink Tx switching based on a first path, where the first path is used to indicate that the second Tx switches within the third band pair from the fifth band to the seventh band, and the first Tx switches from the seventh band to the sixth band in the fourth band pair; and
performing uplink Tx switching based on a second path, where the second path is used to indicate that the first Tx switches from the fifth band in the third band pair to the sixth band in the fourth band pair, and the second Tx remains on the seventh band.

Uplink transmissions on the fifth band, the sixth band, and the seventh band are all interrupted within a duration of a target switching period, or the terminal performs no uplink transmission within the duration of the target switching period.

Uplink transmissions on the fifth band, the sixth band, and the seventh band are all interrupted within a duration of a fourth switching period, or the terminal performs no uplink transmission within the duration of the fourth switching period, or the terminal performs uplink transmission within a second time period.

Uplink transmissions on the fifth band, the sixth band, and the seventh band are all interrupted within a duration of a sixth switching period, or the terminal performs no uplink transmission within the duration of the sixth switching period.

Uplink transmissions on the fifth band and the sixth band are both interrupted within the duration of the sixth switching period, or the terminal performs no uplink transmission within the duration of the sixth switching period, or the terminal performs uplink transmission within the sixth switching period; where
the target switching period is a greater value of the fourth switching period and a fifth switching period;
the fourth switching period is a switching period corresponding to the third band pair;
the fifth switching period is a switching period corresponding to the fourth band pair;
the second time period is a time period corresponding to a difference between the fifth switching period and the fourth switching period; and
the sixth switching period is a switching time period for the first Tx to switch from the fifth band in the third band pair to the sixth band in the fourth band pair.

Optionally, the target manner includes at least one of the following:
a terminal implementation manner;
a terminal reporting manner;
a UE capability reporting manner; and
a predefined rule.

Optionally, in a case that the target manner includes the UE capability reporting manner, and the terminal reports the first capability to the network-side device, uplink Tx switching is determined based on the second path; or
in a case that the target manner includes the UE capability reporting manner, and the terminal reports the second capability to the network-side device, uplink Tx switching is determined based on the first path.

Optionally, the predefined rule includes at least one of the following:
a correspondence between the second path and a first scenario, where an interruption time or a switching time for the terminal to perform uplink Tx switching based on the second path is related to the first capability, and the first scenario includes at least one of the following: the first Tx and the second Tx of the terminal perform uplink Tx switching from the third band pair to the fourth band pair; the network-side device schedules transmission on the sixth band; an RRC parameter configuration includes two Tx-s on different bands; and an associated band of the sixth band is the seventh band;
a correspondence between the first path and a second scenario, where an interruption time or a switching time for the terminal to perform uplink Tx switching based on the first path is related to the second capability, and the second scenario includes the network-side device scheduling transmission on the sixth band and transmission on the seventh band;
a correspondence between the second path and a first comparison result, where the first comparison result is that the target switching period is greater than or equal to the sixth switching period; and
a correspondence between the first path and a second comparison result, where the second comparison result is that the target switching period is less than the sixth switching period.

The information reporting apparatus in this embodiment of this application may be an electronic device, for example an electronic device having an operating system, or may be a component of an electronic device, for example, an integrated circuit or a chip. The electronic device may be a terminal or other devices than terminals. For example, the terminal may include but is not limited to the types of the terminal 11 listed above, and the other devices may be a server, a network attached storage (Network Attached Storage, NAS), or the like, which are not specifically limited in the embodiments of this application.

The information reporting apparatus provided in this embodiment of this application can implement the processes implemented in the method embodiment in FIG. 2, with the same technical effects achieved. To avoid repetition, details are not described herein again.

As shown in FIG. 6, an embodiment of this application further provides a communication device 600 including a processor 601 and a memory 602. The memory 602 stores a program or instructions executable on the processor 601. For example, when the communication device 600 is a terminal, when the program or instructions are executed by the processor 601, the steps of the foregoing information reporting method embodiment are implemented.

An embodiment of this application further provides a terminal including a processor and a communication interface, where the communication interface is coupled to the processor, and the processor is configured to execute a program or instructions to implement the steps of the method embodiment in FIG. 2. This terminal embodiment corresponds to the foregoing method embodiment on the terminal side. All processes and implementations in the foregoing method embodiment are applicable to this terminal embodiment, with the same technical effect achieved. Specifically, FIG. 6 is a schematic diagram of a hardware structure of a terminal for implementing the embodiments of this application.

The terminal 600 includes but is not limited to at least some of components such as a radio frequency unit 601, a network module 602, an audio output unit 603, an input unit 604, a sensor 605, a display unit 606, a user input unit 607, an interface unit 608, a memory 609, and a processor 610.

It can be understood by persons skilled in the art that the terminal 600 may further include a power supply (for example, a battery) supplying power to the components. The power supply may be logically connected to the processor 610 via a power management system, so that functions such as charge management, discharge management, and power consumption management are implemented via the power management system. The structure of the terminal shown in FIG. 6 does not constitute any limitation on the terminal, and the terminal may include more or fewer components than shown in the figure, or combine some of the components, or have different arrangements of the components. Details are not described herein.

It should be understood that in an embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (for example, a camera) in a video capture mode or an image capture mode. The display unit 606 may include a display panel 6061. The display panel 6061 may be configured in a form of a liquid crystal display, an organic light-emitting diode display, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (for example, a volume control button or an on/off button), a trackball, a mouse, and a joystick. Details are not described herein.

In an embodiment of this application, the radio frequency unit 601 receives downlink data from a network-side device and sends the data to the processor 610 for processing; and the radio frequency unit 601 can additionally send uplink data to the network-side device. Generally, the radio frequency unit 601 includes but is not limited to an antenna, an amplifier, a transceiver, a coupler, a low noise amplifier, a duplexer, and the like.

The memory 609 may be configured to store a software program or instruction and various data. The memory 609 may mainly include a first storage area for storing a program or instructions and a second storage area for storing data. The first storage area may store an operating system, an application program or instructions required by at least one function (for example, a sound play function or an image play function), and the like. In addition, the memory 609 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in the embodiments of this application includes but is not limited to these or any other applicable types of memories.

The processor 610 may include one or more processing units. Optionally, the processor 610 may integrate an application processor and a modem processor. The application processor mainly processes operations involving an operating system, a user interface, application programs, and the like. The modem processor mainly processes wireless communication signals, for example, being a baseband processor. It can be understood that the modem processor may alternatively be not integrated in the processor 610.

An embodiment of this application further provides a readable storage medium. The readable storage medium stores a program or instructions, and when the program or instructions are executed by a processor, the processes of the foregoing the information reporting method embodiment are implemented, with the same technical effects achieved. To avoid repetition, details are not described herein again.

The processor is a processor in the terminal described in the foregoing embodiment. The readable storage medium includes a computer-readable storage medium, for example, a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface, where the communication interface is coupled to the processor, and the processor is configured to execute a program or instructions to implement the processes of the foregoing information reporting method embodiment, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program or program product, where the computer program or program product is stored in a storage medium, and the computer program or program product is executed by at least one processor to implement the processes of the foregoing information reporting method embodiment, with the same technical effects achieved. To avoid repetition, details are not described herein again.

It should be noted that in this specification, the terms "include", "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the embodiments of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the foregoing descriptions of the embodiments, persons skilled in the art may clearly understand that the method in the foregoing embodiments can be implemented by using a computer software product in combination with a necessary universal hardware platform, and certainly may alternatively be implemented by using hardware. The computer software product is stored in a storage medium (for example, ROM/RAM, a magnetic disk, or an optical disc) and includes several instructions for instructing a terminal or a network-side device to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, persons of ordinary skill in the art may develop many other forms without departing from the essence of this application and the protection scope of the claims, and all these embodiments shall fall within the protection scope of this application.

## Claims

1. An information reporting method, comprising:
reporting, by a terminal, first information to a network-side device, wherein the terminal comprises a first uplink transmission channel Tx and a second Tx, and the first information comprises at least one of the following:
a first capability used to indicate that the terminal supports the second Tx performing uplink transmission within a first switching period, wherein the first switching period is a switching period corresponding to a target band pair (band pair) where the first Tx is located when performing uplink Tx switching; and
a second capability used to indicate that the terminal supports the first Tx performing uplink transmission within a first time period, wherein the first time period is a difference between a third switching period and a second switching period, the third switching period is a switching period corresponding to a second band pair where the second Tx is located when performing uplink switching, and the second switching period is a switching period corresponding to a first band pair where the first Tx is located when performing uplink switching;
reporting the first capability based on at least one of the following:
information of the target band pair;
information of at least one band (band) in the target band pair, the at least one band comprising a first band;
identification information of the first band;
information of a target band list (list); and
information of a band combination BC; wherein
the first band is a band of the first Tx before uplink Tx switching, or the first band is a band of the first Tx after uplink Tx switching; and
reporting the second capability based on at least one of the following:
information of the first band pair; and
information of the second band pair.

2. The information reporting method according to claim 1, wherein the method further comprises:
in a case that the first capability is reported based on the information of the target band pair, in a case that the first Tx performs uplink Tx switching within the target band pair, using, by the terminal, the second Tx to perform uplink transmission on a third band outside of the target band pair within the first switching period;
in a case that the first capability is reported based on the information of the target band pair and the information of at least one band in the target band pair, in a case that the first Tx performs uplink Tx switching within the target band pair, using, by the terminal, the second Tx to perform uplink transmission on a third band outside of the target band pair within the first switching period;
in a case that the first capability is reported based on the information of the target band pair, in a case that the first Tx performs uplink Tx switching on the first band of the target band pair and a third band outside of the target band pair, using, by the terminal, the second Tx to perform uplink transmission on a second band of the target band pair within the first switching period;
in a case that the first capability is reported based on the information of the target band pair and the information of the first band of the target band pair, in a case that the first Tx performs uplink Tx switching on the first band of the target band pair and a third band outside of the target band pair, using, by the terminal, the second Tx to perform uplink transmission on the second band of the target band pair within the first switching period;
in a case that the first capability is reported based on the identification information of the first band, in a case that the first Tx performs uplink Tx switching on the first band, using, by the terminal, the second Tx to perform uplink transmission on a third band within the first switching period, wherein the third band is different from a band where the first Tx is located when performing uplink Tx switching;
in a case that the first capability is reported based on the information of the target band list, in a case that the first Tx performs uplink Tx switching on any band of the target band list, using, by the terminal, the second Tx to perform uplink transmission on a third band within the first switching period, wherein the third band is different from the band where the first Tx is located when performing uplink Tx switching;
in a case that the first capability is reported based on the BC information, in a case that the first Tx performs uplink Tx switching on any band of the BC, using, by the terminal, the second Tx to perform uplink transmission on a third band within the first switching period, wherein the third band is different from the band where the first Tx is located when performing uplink Tx switching; and
in a case that the first Tx performs uplink Tx switching on any band corresponding to the terminal, using, by the terminal, the second Tx to perform uplink transmission on a third band within the first switching period, wherein the third band is different from the band where the first Tx is located when performing uplink Tx switching.

3. The information reporting method according to claim 2, wherein the third band comprises any one of the following:
a band outside of the target band pair;
a specific band;
a protocol-specified band; and
a band reported by the terminal and bound to the target band pair.

4. The information reporting method according to claim 1, wherein the method further comprises:
in a case that the second capability is reported based on the information of the first band pair and the information of the second band pair, using, by the terminal, the first Tx to perform uplink transmission within the first time period;
in a case that the second capability is reported based on the information of the first band pair, using, by the terminal, the first Tx to perform uplink transmission within the first time period; and
in a case that the second capability is reported not based on the information of the first band pair or the information of the second band pair, forbidding, by the terminal, using the first Tx to perform uplink transmission within the first time period.

5. The information reporting method according to claim 4, wherein the using, by the terminal, the first Tx to perform uplink transmission within the first time period comprises:
in a case that a target condition is met, using, by the terminal, the first Tx to perform uplink transmission within the first time period, wherein the target condition comprises at least one of the following:
the third switching period and the second switching period at least partially overlap in time domain; and
the first band pair and the second band pair each comprise a fourth band, and positions of the third switching period and the second switching period are both configured on the fourth band.

6. The information reporting method according to claim 1, wherein the method further comprises:
in a case that the first Tx and the second Tx of the terminal perform uplink Tx switching from a third band pair to a fourth band pair, wherein the third band pair comprises a fifth band and a seventh band, and the fourth band pair comprises a sixth band and the seventh band, determining, by the terminal based on a target manner, at least one of the following:
the terminal performs uplink Tx switching based on a first path, wherein the first path is used to indicate that the first Tx switches within the third band pair from the fifth band to the seventh band, and the second Tx switches from the seventh band to the sixth band in the fourth band pair;
the terminal performs uplink Tx switching based on a second path, wherein the second path is used to indicate that the first Tx switches from the fifth band in the third band pair to the sixth band in the fourth band pair, and the second Tx remains on the seventh band;
uplink transmissions on the fifth band, the sixth band, and the seventh band are all interrupted within a duration of a target switching period, or the terminal performs no uplink transmission within the duration of the target switching period;
uplink transmissions on the fifth band, the sixth band, and the seventh band are all interrupted within a duration of a fourth switching period, or the terminal performs no uplink transmission within the duration of the fourth switching period, or the terminal performs uplink transmission within a second time period;
uplink transmissions on the fifth band, the sixth band, and the seventh band are all interrupted within a duration of a sixth switching period, or the terminal performs no uplink transmission within the duration of the sixth switching period; and
uplink transmissions on the fifth band and the sixth band are both interrupted within the duration of the sixth switching period, or the terminal performs no uplink transmission within the duration of the sixth switching period, or the terminal performs uplink transmission within the sixth switching period; wherein
the target switching period is a greater value of the fourth switching period and a fifth switching period;
the fourth switching period is a switching period corresponding to the third band pair;
the fifth switching period is a switching period corresponding to the fourth band pair;
the second time period is a time period corresponding to a difference between the fifth switching period and the fourth switching period; and
the sixth switching period is a switching time period for the first Tx to switch from the fifth band in the third band pair to the sixth band in the fourth band pair.

7. The information reporting method according to claim 6, wherein the target manner comprises at least one of the following:
a terminal implementation manner;
a terminal reporting manner;
a UE capability reporting manner; and
a predefined rule.

8. The information reporting method according to claim 7, wherein in a case that the target manner comprises the UE capability reporting manner, and the terminal reports the first capability to the network-side device, the terminal determines to perform uplink Tx switching based on the second path; or
in a case that the target manner comprises the UE capability reporting manner, and the terminal reports the second capability to the network-side device, the terminal determines to perform uplink Tx switching based on the first path.

9. The information reporting method according to claim 7, wherein the predefined rule comprises at least one of the following:
a correspondence between the second path and a first scenario, wherein an interruption time or a switching time for the terminal to perform uplink Tx switching based on the second path is related to the first capability, and the first scenario comprises at least one of the following: the first Tx and the second Tx of the terminal perform uplink Tx switching from the third band pair to the fourth band pair; the network-side device schedules transmission on the sixth band; an RRC parameter configuration comprises two Tx-s on different bands; and an associated band of the sixth band is the seventh band;
a correspondence between the first path and a second scenario, wherein an interruption time or a switching time for the terminal to perform uplink Tx switching based on the first path is related to the second capability, and the second scenario comprises the network-side device scheduling transmission on the sixth band and transmission on the seventh band;
a correspondence between the second path and a first comparison result, wherein the first comparison result is that the target switching period is greater than or equal to the sixth switching period; and
a correspondence between the first path and a second comparison result, wherein the second comparison result is that the target switching period is less than the sixth switching period.

10. An information reporting apparatus, comprising:
a reporting module configured to: report first information to a network-side device, wherein a terminal comprises a first uplink transmission channel Tx and a second Tx, and the first information comprises at least one of the following:
a first capability used to indicate that the terminal supports the second Tx performing uplink transmission within a first switching period, wherein the first switching period is a switching period corresponding to a target band pair (band pair) where the first Tx is located when performing uplink Tx switching; and
a second capability used to indicate that the terminal supports the first Tx performing uplink transmission within a first time period, wherein the first time period is a difference between a third switching period and a second switching period, the third switching period is a switching period corresponding to a second band pair where the second Tx is located when performing uplink switching, and the second switching period is a switching period corresponding to a first band pair where the first Tx is located when performing uplink switching;
report the first capability based on at least one of the following:
information of the target band pair;
information of at least one band (band) in the target band pair, the at least one band comprising a first band;
identification information of the first band;
information of a target band list (list); and
information of a band combination BC; wherein
the first band is a band of the first Tx before uplink Tx switching, or the first band is a band of the first Tx after uplink Tx switching; and
report the second capability based on at least one of the following:
information of the first band pair; and
information of the second band pair.

11. A terminal, comprising a processor and a memory, wherein the memory stores a program or instructions executable on the processor, and when the program or instructions are executed by the processor, the steps of the information reporting method according to any one of claims 1 to 9 are implemented.

12. A readable storage medium, wherein the readable storage medium stores a program or instructions, and when the program or instructions are executed by a processor, the steps of the information reporting method according to any one of claims 1 to 9 are implemented.

13. A chip, wherein the chip comprises a processor and a communication interface, wherein the communication interface is coupled to the processor, and the processor is configured to run a program or instructions to implement the steps of the information reporting method according to any one of claims 1 to 9.

14. A computer program product, wherein when the program product is executed by at least one processor, the steps of the information reporting method according to any one of claims 1 to 9 are implemented.

15. An electronic device, wherein the electronic device is configured to perform the steps of the information reporting method according to any one of claims 1 to 9.
